# EUROPEAN PATENT SPECIFICATION

(11) **EP 4 645 885 B1**
(45) Date of publication and mention of the grant of the patent: **14.10.2026**
(21) Application number: 25203988.8
(22) Date of filing: 10.07.2012
(51) Int. Cl.: H04N 21/472, H04N 21/478, G06F 17/00

(54) **METHODS AND SYSTEMS OF PROVIDING VISUAL CONTENT EDITING FUNCTIONS**
VERFAHREN UND SYSTEME ZUR BEREITSTELLUNG VON FUNKTIONEN ZUR BEARBEITUNG VON VISUELLEM INHALT
PROCÉDÉS ET SYSTÈMES DE FOURNITURE DE FONCTIONS D'ÉDITION DE CONTENU VISUEL

(30) Priority: 12.07.2011 US 201161506670 P
(43) Date of publication of application: 05.11.2025
(62) Document number(s) of the earlier application(s) in accordance with Art. 76 EPC: 21218404.8 / 4 009 651; 21211519.0; 17196636.9 / 3 288 275; 12811671.2 / 2 732 383
(73) Proprietor: Snap Inc., Santa Monica, CA 90405 (US)
(72) Inventor: HOGEG, Moshe, Santa Monica, 90405 (US); SHEMESH, Yosef, Santa Monica, 90405 (US)
(74) Representative: Mathys & Squire

(56) References cited:
- US-A1- 2003 148 773
- US-A1- 2007 271 521
- "Instagram: Beautiful Photo Editing and Sharing App for iPhone", INTERNET CITATION, 15 October 2010 (2010-10-15), pages 1 - 3, XP008173125, Retrieved from the Internet <URL:http://www.makeuseof.com/tag/instagram-photo-editing-and-sharing/> [retrieved on 20141104]

## Description

### FIELD AND BACKGROUND OF THE INVENTION

The present invention, in some embodiments thereof, relates to image processing and, more particularly, but not exclusively, to systems and methods of selectively adjusting visual content on client terminals.

Emerging telecommunications services enable client terminals, such as handheld devices, i.e. cell phones and tablets to exchange data containers of different types and/or to post these data containers in a content sharing platform. For example, a data container may include data representing a text segment, an image, an audio signal, and/or a video signal.

For example, Twitter^{™} offers a social networking and microblogging service, enabling its users to send and read messages, also referred to as tweets. Tweets are text-based posts of up to 140 characters displayed on the user's profile page.

Other examples include real-time visual media sharing platforms which allow a user to share with his friends an image he or she captured, for example in a social network such as Facebook^{™} and/or other users of the real-time visual media sharing platforms. Examples of such real-time visual media sharing platforms are Mobli^{™}, Instagram^{™}, and Twitter^{™}.

Some of these real-time visual media sharing platforms suggest functions that allow the user to edit the shared image, for example using color filters and/or the like.

US 2007/271521 A1 discloses a system for generating and composing a context-sensitive user interface that is utilized for implementing graphic object such as button and menu.

### SUMMARY OF THE INVENTION

According to some embodiments of the present invention, there is provided a method of selecting visual content editing functions. The method comprises storing a plurality of records each with suitability data of one of a plurality of visual content editing functions, receiving, from a client terminal, a request with visual content data pertaining to a visual content, selecting a group from the plurality of visual content editing functions according to the visual content data, and responding to the request of the client terminal by sending a response with a list which comprises at least one of a plurality of members of the group and a plurality of indications for the plurality of members.

Optionally, the method further comprises capturing the visual content using an image sensor installed in the client terminal.

Optionally, the visual content data comprises positional data pertaining to the client terminal, the selecting being performed according to the positional data.

More optionally, the selecting comprises using the positional data to classify the location of the client terminal, the selecting being performed according to the classification.

Optionally, the visual content data comprises a velocity of the client terminal, the selecting being performed according to the velocity.

Optionally, the method further comprises analyzing textual content a plurality of content providing network sources to identify at least one current event, the selecting being performed according to the at least one current event.

More optionally, the analyzing comprises at least one of a semantic analysis and a statistic analysis of the textual content.

More optionally, the method further comprises acquiring at least one demographic characteristic of a user of the client terminal; wherein the selecting is performed according to the at least one demographic characteristic.

More optionally, the storing comprises automatically generating at least some of the plurality of visual content editing functions according to at least one of the visual content data, personal data pertaining to a user of the client terminal, and information acquired from textual content a plurality of content providing network sources.

Optionally, the request comprises user identification, the selecting comprises acquiring personal data pertaining to a user of the client terminal according to the user identification, the selecting being performed according to the personal data.

More optionally, the personal data being extracted from a social network profile.

More optionally, the personal data comprises a log of previously selected visual content editing functions from the plurality of visual content editing functions.

More optionally, the request comprises user identification, the selecting comprises acquiring social network data pertaining to a friend of a user of the client terminal in a social network according to the user identification, the selecting being performed according to the social network data.

According to some embodiments of the present invention, there is provided a method of adjusting visual content. The method comprises selecting visual content on a client terminal, extracting visual content data pertaining to the visual content, forwarding a request which includes the visual content data to a network node via a network, receiving, in response to the request, a list of a plurality of visual content editing functions from the network node, presenting, on the client terminal, the plurality of visual content editing functions to a user, receiving a selection of at least one member of the list from the user, adjusting the visual content using the at least one member, and outputting the adjusted visual content.

Optionally, the selecting comprises locally capturing the visual content using an image sensor installed in the client terminal.

Optionally, the selecting comprises accessing a database via the network and selecting the visual content using a user interface on the client terminal.

Optionally, the extracting comprises image processing the visual content to perform at least one of identifying an object having a predefined feature in the visual content, classifying a scene depicted in the visual content, recognizing a facial feature in the visual content, and detecting a moving object in the visual content and the request comprises an outcome of the image processing.

More optionally, the method further comprises identifying positional data of the client terminal; the visual content data comprises the positional data.

Optionally, the request comprises user identification data; further comprising extracting personal data according to the user ID; wherein the list being formed according to the personal data.

Optionally, the adjusting comprises acquiring the at least one member from the network node.

According to some embodiments of the present invention, there is provided a system of providing a plurality of visual content editing functions to a plurality of client terminals. The system comprises a network interface which receives a request having from a client terminal, a repository which stores a plurality of records each with suitability data of one of a plurality of visual content editing functions, and a selection module which selects a group of the plurality of visual content editing functions according to the visual content data and generates a list which comprises at least one of a plurality of members of the group and a plurality of indications for the plurality of members. The network interface sends the list as a response to the request.

Optionally, the system further comprises a plurality of client modules each allows a user to create a visual content editing function and update the repository with the created visual content editing function.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of a system, which is connected via a communication network, to client terminals and provides thereto a list of functions for editing visual content, according to some embodiments of the present invention;
FIGs. 2A and 2B are sets of images where each set includes an original image, a color filtered image, and a color filtered image with an overlay addition of the Nike^{™} logo, according to some embodiments of the present invention; and
FIG. 3 is a flowchart of a method for processing visual content using one or more visual content editing functions, according to some embodiments of the present invention.

### DESCRIPTION OF EMBODIMENTS OF THE INVENTION

The present invention, in some embodiments thereof, relates to image processing and, more particularly, but not exclusively, to systems and methods of selectively adjusting visual content on client terminals.

According to some embodiments of the present invention, there are methods and systems which provide a remote client terminal with a plurality of visual content editing functions, such as image processing filters and/or overlays, for adjusting a certain visual content based on data extracted therefrom and/or related thereto, real time data, such as news events, and/or personal data related to the user of the client terminal. Optionally, the overlays include sound overlays which are designed to be added to the visual content. The system provides the user with a list of visual content editing functions which are adapted to his needs, preferences and/or to a currently captured visual content. In such a manner, the user is not bound to choose from a fixed set of visual content editing functions and/or has to review a huge collection of visual content editing functions. The selected list exposes the user to different visual content editing functions, which are adapted to his current needs, preferences and/or to a currently captured visual content, such as an image or a video file (i.e. video files, multimedia files, and audio/video files). For example, the system allows a user to receive location based visual content editing functions which allow him to add automatically suitable graphics and/or text by a single click on the presented list. The system further allows a user to receive visual content editing functions which are frequently used by his friends (i.e. social network friends, followers and/or followed users), frequently used by him, and/or suitable to a set of circumstances under which the respective visual content is taken.

Optionally, the system includes a repository with visual content editing functions which are generated in real time according to local and/or global news events and/or visual content editing functions which are generated to meet the needs of any of a plurality of subscribers.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

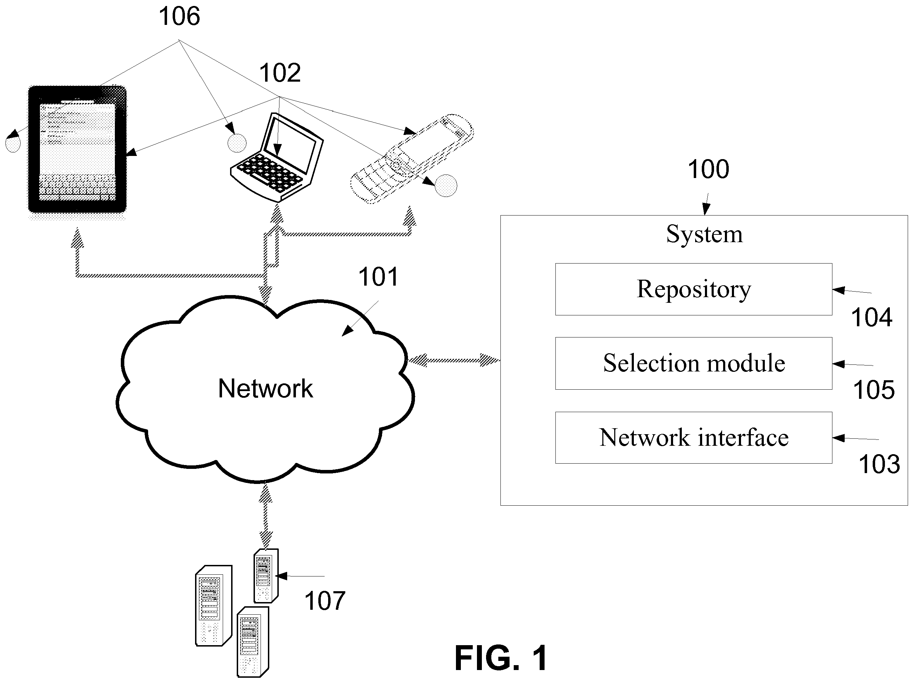

Reference is now made to FIG. 1, which is a schematic illustration of a system 100, optionally a network node, which is connected, via a communication network 101, such as the internet, to a plurality of client terminals and provides to these client terminals, optionally in response to a request, a list of functions for editing visual content, such one or more images or video files, according to some embodiments of the present invention. As used herein, editing comprises processing one or more images or frames of a video file, optionally pixel wise, using image filters to filter an image or some or all frames of a video file, adding visual content to an image or one or more frames of a video file, for example graphic elements, adding audible content to an image and/or a video file, overlying or embedding text boxes, overlying or embedding graphical elements, and/or the like, adding frames to a sequence of frames in a video file, and/or the like. For brevity, overlying and embedding may be used herein interchangeably. For brevity, visual content added to the edited visual content is referred to as a visual overlay or overlay. Audible content added to the edited visual content is referred to as a sound overlay.

The system 100 allows users of the client terminals 102 to receive a list of visual content editing functions and to select one or more functions therefrom for editing a selected visual content, such as an image or a video file, for example before the sending and/or the uploading of the visual content, for example as a visual message, for example a visual twit, such as a Mobli^{™} message, Twitter^{™} message and/or an Instagram^{™} message. As used herein, a client terminal means, a mobile telephone, a Smartphone, a tablet, a laptop, a camera having a network interface and/or the like.

The system 100, which is optionally implemented using one or more network servers, includes a network interface 103, such as network interface card and/or a port. The network interface facilitates the establishing of bidirectional communication between the system 100 and the client terminals 102. This communication allows the system 100 to receive requests for visual content editing functions and to respond with a list of selected visual content editing functions, for example as described below.

The system 100 further includes a repository 104 for hosting the visual content editing function records, optionally associated with the visual content editing functions and a selection module 105 which receives the request for visual content editing functions via the network interface 103 and generates a list of visual content editing functions according to request, for example as described below. The list is optionally forwarded to the client terminals via the network interface 103.

Optionally, each client terminal 102 hosts a local module 106, such as an app, a widget, or an add on, with a user interface, for example a graphical user interface (GUI), that presents the user with the option to select visual content for adaptation. For example, the client terminal allows the user to select a file from the memory of the client terminal, a social network profile, an image repository account, such as flicker, and/or the like. Additionally or alternatively, the user interface is adapted to allow the user to send an image or a video taken using the client terminal for processing by one of the plurality of visual content editing functions. For example, the client terminal is a cellular device having an image sensor and a user interface that allows a user to select a member of a list of visual content editing functions which are presented thereto, for example as exemplified below. Optionally, a plurality of user profiles, such as subscriber profiles, are stored and managed the system 100, for example as described below. Optionally, the user profiles are subscriber profiles of a social network, which are managed by a subscriber database, for example managed by separate web servers 107 and/or in a local repository.

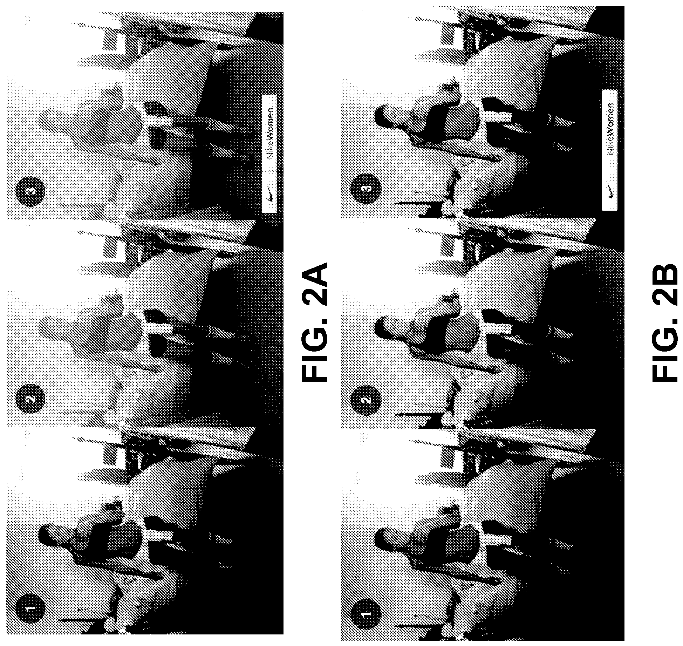

According to some embodiments of the present invention, users may generate visual content editing functions. These visual content editing functions are than uploaded to the repository 104 and a respective documenting record is formed. Optionally, the user defines the sharing of the visual content editing functions. For example, the user defines whether the visual content editing functions are for personal use only, for friends use, and/or for public use. In such embodiments, the visual content editing functions may be tagged with their sharing rights. Optionally, the local module 106 includes visual content editing functions generation module. The generated functions may be customized overlays with selected graphic, color filter with selected colors, and/or any other filters which are planned by the user. For example, each one of FIGs. 2A and 2B depicts a set of images the first, marked with (1) is the original, the second, marked with (2) is when a color filter is applied, and the third, marked with (3) is when a color filter is applied with an overlay addition of the Nike^{™} logo. The generated functions may be customized sound overlays with selected tones and/or soundtrack. As used herein, a sound overlay means a soundtrack, a music file, and/or any audible content that is set to be played simultaneously to the presentation of the visual content. For example, the sound overlay may an audible advertisement, optionally personalized, music selected by the uploading user, music selected for the uploading user, for instance using an automatic music selection module, such as Genius^{™} of Apple^{™}, and/or the like.

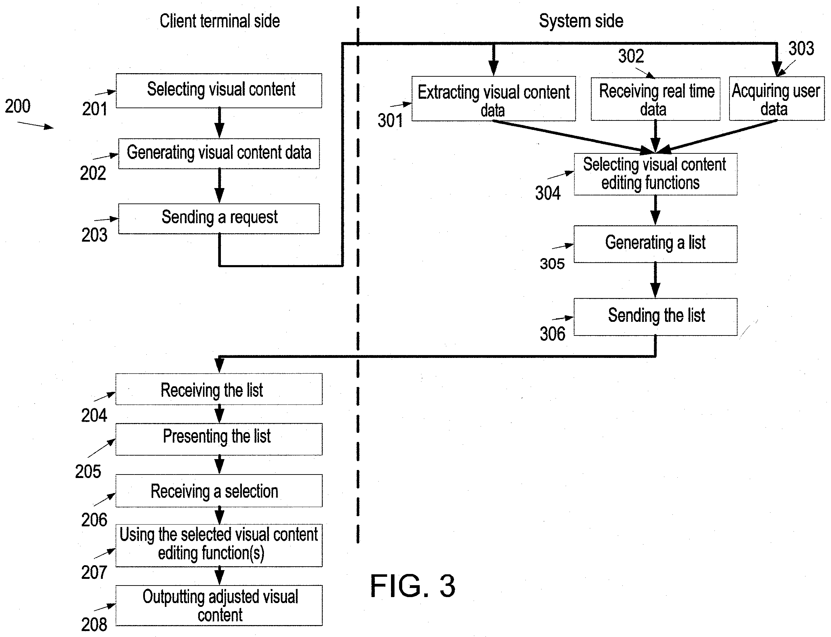

Reference is now made to FIG. 3, which is a flowchart of a method 200 for processing visual content, such as an image or a video file, using one or more visual content editing functions, according to some embodiments of the present invention.

First, as shown at 201, visual content is selected for editing by the user. The selection is optionally performed using a user interface on the client terminal, for example a GUI that is presented on a touch screen of client terminal. The selected visual content may be selected from an internal or an external library or a currently captured image or video file.

Optionally, as shown at 202, visual content data is generated. Optionally, the visual content is locally processed to identify descriptive features that allow classifying depicted scenes and/or characters and/or for identifying certain objects. The image processing may be performed using known image processing algorithms, such as face portion recognition algorithm, a close up detection algorithm, a motion detection algorithm and/or the like. In such an embodiment, the visual content data includes include the descriptive information.

Additionally or alternatively, the visual content data includes positional data pertaining to the location of the client terminal. The positional data, such as location, velocity, and/or acceleration, is optionally acquired from a global positioning system (GPS) unit of the client terminal, assisted GPS, or any other positioning system.

Additionally or alternatively, the visual content data includes information pertaining to the type of the client terminal.

Additionally or alternatively, the visual content data includes user identification (ID) pertaining to the user of the client terminal, for example as described below.

Now, as shown at 203, a request with the visual content data is sent to the system 100, for example as a hypertext transfer protocol (HTTP) message or any other web message.

Optionally, the request includes visual content data pertaining to the selected visual content. The visual content data allows the system 100, for example the selection module 105 to select and/or adapt visual content editing functions to be sent, in response, to the client terminal. For example, at the system side, as shown at FIG. 3, in response to the request from a client terminal, a list of visual content editing functions is generated. First, as shown at 301, the visual content data is extracted from the received request. Additionally or alternatively, as shown at 302, real time is acquired, for example by using web crawlers and/or by accessing selected databases and/or websites for example as described below. Additionally or alternatively, as shown at 303, user data is acquired, for example by accessing social network profiles and/or the aforementioned subscriber database. The user data is acquired with respect to a user ID that is extracted from the request, for example a subscriber ID. This user ID may be provided by the local module 106 and/or from any ID tag of the client terminal.

Now, as shown at 304, based on the visual content data, the real time data, and/or the user data, a plurality of visual content editing functions are selected from the repository 104.

According to some embodiments of the present invention, for example as described above, the visual content data includes positional data. In these embodiments, the positional data is analyzed to select specific location related visual content editing functions.

In such embodiments, some of all of the related visual content editing function records in the repository 104 may be tagged, and optionally weighted, according to their relevancy to a certain geographical area (i.e. coordinates, a country, a city, and a street) and/or location type (i.e. a restaurant, a working place, home, a bar, an amusement park, a train station, a shop, a mall, and a sport venue).

Optionally, each visual content editing function record includes an array of weighted tags (i.e. scored and/or ranked) each given a value according to the affinity of the respective visual content editing function to a different location type and/or geographical area. In use, the user positional data is matched with the array of weighted tags of each one of the visual content editing function records to identify one or more relevant visual content editing functions.

In such a manner, for example, if the positional data is indicative that the visual content was captured in Australia, a visual content editing function which provides an overlay of the Australian flag and/or a sound overlay of the Australian anthem and/or Australian popular music may be selected. In another example, if the positional data is indicative that the visual content was captured in New York, a visual content editing function which provides an overlay of the statue of liberty and/or a sound overlay of the song New York new York may be provided. In another example, if the positional data is indicative that the visual content was captured in a café, a visual content editing function which provides an overlay of a coffee supplier, the café place, and/or café related activities and/or a sound overlay with which is related to café are provided.

According to some embodiments of the present invention, visual content editing functions are selected according to a velocity that is measured for the client terminal. The velocity is optionally part of the positional data, for example as outlined above. Similarly to the above, the visual content editing function records may include one or more tags which are indicative of the relevancy of a respective visual content editing function to one or more velocities. In such a manner, for example, a visual content editing function which may be selected to high velocities may be an overlay with a "road trip" logo, a smear filter for increasing or decreasing a smearing artifact, a suitable soundtrack and/or the like.

According to some embodiments of the present invention, the real time data includes one or more real time events which occurred lately, for example in the last few hours, days, or weeks. Optionally, the real time events are acquired from news aggregators, such as Google^{™} News, and/or from different websites using web crawlers. Optionally, semantic and/or statistic analysis is used to extract keywords from the news events. Each visual content editing function record is optionally tagged with metadata that includes a plurality of characterizing words or sentences. The keywords may now be matched with the plurality of characterizing words or sentences of each record to determine the relevancy of the respective visual content editing function to the current events. Optionally, visual content editing functions may be uploaded by the operator in response to current events. In such an embodiment, the operator may manually add tag(s) to or update tag(s) of the visual content editing function records, for example with keywords and/or location relevancy data.

The matching between the current events and the visual content editing function records allows selecting visual content editing functions with a real time contemporary meaning. For example, visual content editing functions which are related to the environment, for example overlays with images of Greenpeace logo, images of wild animals, green color filters and/or respective audio may be selected when the current event is "Earth day". In another example, an overlay with a specific slogan is selected. Optionally, a sound overlay wherein the slogan is sound is selected.

Optionally, the real time events are weighted according to the scope of coverage they receive in news websites. These events may be weighted according to their geographical relevance to the user. For example, the real time events are weighted according to the scope of coverage they receive in news websites which handle local matters in proximity to the user. For example, the selection module 105 identifies the current location of the user, for example according to his positional data and weights news events from news websites according to their relevancy to the user location. In such an embodiment, news events from the website sandiego6.com which provides San Diego news from news events of general news websites if the user is located in San Diego.

The matching between positional data of the user and current events and the visual content editing functions allows selecting visual content editing functions which are related to current events in the neighborhood, the city, the country, and/or the area around the user. For example, specific location events such as elections for a local candidate in a U.S state may be matched for a user that is located in the respective U.S state with a visual content editing function that is tagged with the candidate's name, such as an overlay with her name. In another example, the location of the user is a stadium and the news indicate that a certain sport match occurs or about to occur in the stadium, visual content editing functions which are related to the playing teams, for example overlays with images of the logo(s) and/or player(s) of the teams, color filters with the colors of the logos of teams, and/or the like may be selected for the user.

According to some embodiments of the present invention, visual content editing functions are selected according to personal information pertaining to the user. Optionally, the system 100 manages a plurality of user profiles, such as subscriber profiles, for example as described above. Each user profile includes personal information pertaining to the user, such as demographic data, visual content editing functions selection history, location positional data history, and/or preferences. In use, the selection module 105 uses the user ID to identify a respective user profile. Additionally or alternatively, the system 100 uses the user ID to extract personal data from his social network page, for example gender, birth date, hometown, education, marital status, and/or interests. The user data from the user profile and/or the social network page is used to select visual content editing functions, for example according to tags in the visual content editing function records, similarly to the described above. In such embodiments, the user consent is optionally acquired.

Additionally or alternatively, the system 100 uses the user ID to extract personal data which defines favorite visual content editing functions. These favorite functions may be top used visual content editing functions, selected and/or tagged visual content editing functions, visual content editing functions which are used to create most of the posted images and/or the like.

In such embodiments, the visual content editing functions are tagged as suitable for users with certain demographic characteristic(s), such as age range, or a certain combination of demographic characteristics, for example age, gender, and marital status. For example, for the age group of between 12 and 17, a visual content editing function of an overlay with an image of Justin Bieber and/or a sound overlay with a song of Justin Bieber may be selected may be selected, for the combination of age and marital status, a visual content editing function of an overlay "I am single" or "I am a proud Mother" can be selected and based on the birth date, a visual content editing function of an overlay with the text "happy birthday", a sound overlay with the song "happy birthday" and/or graphical effect of balloons may be selected.

According to some embodiments of the present invention, visual content editing functions are selected according to the social activity of the user and/or his or her friends. For example, the selection module may access the social network profile to analyze the user's and/or the user's friends news feeds to match visual content editing functions, for example based on a keyword analysis, similarly to the described above regarding news events.

For example, visual content editing functions may be selected according to the user's social activity, such as checking in a certain place, such as a bar, attending a certain event, invited to a certain event, and/or adding indicative content, such as a status line or shared content. Likewise, based on user's friends' preferences may be taken into account when selecting visual content editing functions. For example, if the user profile indicates that the user checked-in a specific restaurant, visual content editing function(s), which are related to restaurants in general and/or to the specific restaurant, are selected. In another example if the user profile indicates that the user has a friend with a birthday, visual content editing function(s), which are related to birthdays in general, are selected.

In another embodiment, visual content editing functions are automatically generated based on the social network profile of the user and/or the selections of friends in his network. For example, a visual content editing function with an overlay that includes a copy of the status of the user may be generated. In another example, if a certain amount of friends of that user chose a specific visual content editing function, this visual content editing function is suggested for the user. In another example, if the user profile indicates that the user has a friend with a birthday, visual content editing function(s), which are related to the specific user who has a birthday, are generated, for example an overlay with the friend's name, a function selected from the most frequent functions he uses and/or the like. Friends' data may be acquired using a social connection graphs.

According to some embodiments of the present invention, visual content editing functions are selected according to previous user selections in the system 100. In such an embodiment, visual content editing functions, which were previously used by the user to enhance visual content, are recorded. This allows weighting visual content editing functions according to their usage prevalence, optionally based on additional terms, such as the location of the user when using the function, the time of the day the user uses the function, and/or the like. In such embodiments, visual content editing functions, which have been selected by the user more than a certain amount of times and/or during a certain time of the day and/or in a certain location, are selected or receive a high score or rank.

For example, if when the user visited in a certain location, for instance the Madison Square Garden, he choose a New York Nicks logo, a function with an overlay of the New York Nicks logo may be selected when the user is back in this location and/or in a similar location, for example in other sport venues.

As described above, a user may create customized visual content editing functions and upload them to the system 100. Optionally, visual content editing functions which are generated by the user and/or his friends, for example social network friends, are selected automatically and/or receive a high ranking in a selection process.

As described above, the visual content data may include descriptive features that allow classifying depicted scenes and/or characters and/or for identifying certain objects. In such an embodiment, visual content editing functions which are tagged as suitable for the descriptive features may be selected. For example, if a car is identified in the visual content, a visual content editing function with an overlay that say "I just pimped my ride" may be selected. If detected a plate or a food portion is identified, a visual content editing function with an overlay and/or a sound overlay that includes promotional content of a food company is presented. In another example, of smiling faces are identified, promotional content to a toothbrush maybe presented.

According to some embodiments of the present invention, the selection module combines some or more of the above methods for selecting visual content editing functions. Optionally, visual content editing functions are ranked or scored by some or all of the aforementioned selection methods. In such a manner, visual content editing functions which receive a cumulative rank or score above a certain threshold and/or a number of visual content editing functions with the top rank and/or score are selected for the list. In such a manner, visual content editing functions are scored according to data acquired from the user's social profile, positional data, and real time data.

Reference is now made, one again, to FIG. 3. Now, as shown at 305, a list which includes the selected visual content editing functions and/or indications of the selected visual content editing functions, for example exemplary thumbnails, is generated and forwarded to the client terminal, as shown at 306.

As shown at 204, the client terminal receives the list of a plurality of visual content editing functions and presents it, as shown at 205, to the user.

The user can now select, as shown at 206, one or more members of the presented list. Optionally, the selected visual content editing functions are stored in the client terminal, for example managed by the local module 106. Additionally or alternatively, the selected visual content editing functions are received in the list. Additionally or alternatively, the visual content editing functions are stored in the repository 104. In such embodiments, after the user selects one or more members, a request for the selected visual content editing functions is forwarded to system 100 which responds with the requested visual content editing functions.

Then, as shown at 207, the visual content is adjusted using the selected visual content editing function(s).

As shown at 208, the adjusted visual content may now be outputted, for example uploaded to a server, posted an/or shared with other subscribers of the system 100, for example as a visual twit, such as a Mobli^{™} message, Twitter^{™} message and/or an Instagram^{™} message, uploaded to a social network webpage and/or forwarded to one or more friends, for example as an electronic message such as an multimedia messaging service (MMS) message.

It is expected that during the life of a patent maturing from this application many relevant methods and/or devices will be developed and the scope of the term a module, a client terminal, and a controller is intended to include all such new technologies *a priori.*

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A method implemented using one or more network servers, said method comprising:
receiving, from a client terminal (102), a request for visual content editing functions to adjust visual content captured by said client terminal, said request being associated with a user at said client terminal;
in response to said request, accessing demographic data for said user from a user profile associated with said user;
selecting (304) a group of visual content editing functions based on said demographic data for said user and based on a group of tags for said selected group of visual content editing functions, said group of tags indicating relevance of said selected group of visual content editing functions to a group of demographic characteristics, said group of tags being provided by a group of visual content editing function record of said selected group of visual content editing functions, at least one visual content editing function of said selected group of visual content editing functions comprising an overlay to be applied to said visual content; and
responding (305, 306) to said request by sending a response with a list which includes said selected group of visual content editing functions and/or indications of said selected visual content editing functions, so as to allow said client terminal (102) to present said group of visual content editing functions on a graphical user interface and to apply said overlay to said visual content in response to a selection of said overlay made by a user using said graphical user interface.

2. The method of claim 1, wherein said request further comprises visual content data comprising positional data that pertains to a location of said client terminal, and wherein selecting said group of visual content editing functions is further based on said positional data.

3. The method of claim 2, wherein selecting said group of visual content editing functions comprises:
classifying said location of said client terminal based on said positional data; and
selecting said group according to said classification.

4. The method of claim 1, wherein said request further comprises visual content data comprising a velocity of said client terminal, and wherein selecting said group of visual content editing functions is further based on said velocity.

5. The method of claim 1, further comprising analyzing textual content from a plurality of content-providing network sources to identify at least one current event, and wherein selecting said group of visual content editing functions is further based on said at least one current event.

6. The method of claim 5, wherein analyzing said textual content comprises performing at least one of semantic analysis of said textual content or statistical analysis of said textual content.

7. The method of claim 1, wherein said request comprises user identification, and wherein selecting said group of visual content editing functions comprises:
acquiring personal data pertaining to said user according to said user identification; and
selecting said group based at least in part on said personal data.

8. The method of claim 7, wherein said personal data is extracted from a social network profile associated with said user.

9. The method of claim 7, wherein said personal data comprises a log of previously selected visual content editing functions by said user.

10. The method of claim 1, wherein at least one visual content editing function of said selected group comprises a function for adding a soundtrack to be played while said visual content is presented.

11. The method of claim 1, wherein at least one visual content editing function of said selected group comprises a function for adding a visual overlay to be presented with said visual content.

12. A system (100) comprising one or more network servers configured for providing a plurality of visual content editing functions to a plurality of client terminals, by:
receiving, from a client terminal (102), a request for visual content editing functions to adjust visual content captured by said client terminal, said request being associated with a user at said client terminal;
in response to said request, accessing demographic data for said user from a user profile associated with said user;
selecting (304) a group of visual content editing functions based on said demographic data for said user and based on a group of tags for said selected group of visual content editing functions, said group of tags indicating relevance of said selected group of visual content editing functions to a group of demographic characteristics, said group of tags being provided by a group of visual content editing function record of said selected group of visual content editing functions, at least one visual content editing function of said selected group of visual content editing functions comprising an overlay to be applied to said visual content; and
responding (305, 306) to said request by sending a response with a list which includes said selected group of visual content editing functions and/or indications of said selected visual content editing functions, so as to allow said client terminal (102) to present said group of visual content editing functions on a graphical user interface and to apply said overlay to said visual content in response to a selection of said overlay made by a user using said graphical user interface.

13. The system of claim 12, wherein said request further comprises visual content data comprising positional data that pertains to a location of said client terminal, and wherein selecting said group of visual content editing functions is further based on said positional data;
preferably, wherein selecting said group of visual content editing functions comprises:
classifying said location of said client terminal based on said positional data; and
selecting said group according to said classification.

14. The system of claim 12, wherein said request further comprises visual content data comprising a velocity of said client terminal, and wherein selecting said group of visual content editing functions is further based on said velocity.

15. A computer program product comprising software instructions which when executed by a processor of one or more network servers cause the network servers to implement a method as claimed in any of claims 1 to 11 and/or to implement the system as claimed in any of claims 12 to 14.

## Patentansprüche

1. Verfahren, das unter Verwendung eines oder mehrerer Netzwerkserver implementiert wird, wobei das Verfahren Folgendes umfasst:
Empfangen von einer Client-Endvorrichtung (102) einer Anforderung für Funktionen zur Bearbeitung visueller Inhalte, um visuelle Inhalte, die von der Client-Endvorrichtung erfasst wurden, anzupassen, wobei die Anforderung einem Benutzer an der Endvorrichtung zugeordnet ist;
als Reaktion auf die Anforderung, Zugreifen auf demografische Daten für den Benutzer aus einem Benutzerprofil, das dem Benutzer zugeordnet ist;
Auswählen (304) einer Gruppe von Funktionen zur Bearbeitung visueller Inhalte basierend auf den demografischen Daten für den Benutzer und basierend auf einer Gruppe von Tags für die ausgewählte Gruppe von Funktionen zur Bearbeitung visueller Inhalte, wobei die Gruppe von Tags die Relevanz der ausgewählten Gruppe von Funktionen zur Bearbeitung visueller Inhalte für eine Gruppe demografischer Merkmale angibt, wobei die Gruppe von Tags von einer Gruppe eines Datensatzes von Funktionen zur Bearbeitung visueller Inhalte der ausgewählten Gruppe von Funktionen zur Bearbeitung visueller Inhalte bereitgestellt wird, wobei wenigstens eine Funktion zur Bearbeitung visueller Inhalte der ausgewählten Gruppe von Funktionen zur Bearbeitung visueller Inhalte eine Überlagerung umfasst, die auf die visuellen Inhalte angewendet werden soll; und
Reagieren (305, 306) auf die Anforderung durch Senden einer Antwort mit einer Liste, die die ausgewählte Gruppe von Funktionen zur Bearbeitung visueller Inhalte und/oder Angaben der ausgewählten Funktionen zur Bearbeitung visueller Inhalte enthält, so dass die Client-Endvorrichtung (102) die Gruppe von Funktionen zur Bearbeitung visueller Inhalte auf einer grafischen Benutzeroberfläche darstellen und die Überlagerung auf die visuellen Inhalte anwenden kann, wenn ein Benutzer die Überlagerung über die grafische Benutzeroberfläche auswählt.

2. Verfahren nach Anspruch 1, wobei die Anforderung ferner Daten visueller Inhalte umfasst, die Positionsdaten umfassen, die sich auf den Standort der Client-Endvorrichtung beziehen, und wobei das Auswählen der Gruppe von Funktionen zur Bearbeitung visueller Inhalte ferner auf den Positionsdaten basiert.

3. Verfahren nach Anspruch 2, wobei das Auswählen der Gruppe von Funktionen zur Bearbeitung visueller Inhalte Folgendes umfasst:
Klassifizieren des Standorts der Client-Endvorrichtung basierend auf den Positionsdaten; und
Auswählen der Gruppe gemäß der Klassifizierung.

4. Verfahren nach Anspruch 1, wobei die Anforderung ferner Daten visueller Inhalte umfasst, die eine Geschwindigkeit der Client-Endvorrichtung umfassen, und wobei das Auswählen der Gruppe von Funktionen zur Bearbeitung visueller Inhalte ferner auf der Geschwindigkeit basiert.

5. Verfahren nach Anspruch 1, das ferner das Analysieren von Textinhalten von einer Vielzahl von Inhaltsbereitstellungsnetzwerkquellen umfasst, um mindestens ein aktuelles Ereignis zu identifizieren, und wobei das Auswählen der Gruppe von Funktionen zur Bearbeitung visueller Inhalte ferner auf dem mindestens einen aktuellen Ereignis basiert.

6. Verfahren nach Anspruch 5, wobei das Analysieren des Textinhalts mindestens das Durchführen eines einer semantischen Analyse des Textinhalts oder einer statistischen Analyse des Textinhalts umfasst.

7. Verfahren nach Anspruch 1, wobei die Anforderung die Benutzeridentifizierung umfasst und wobei das Auswählen der Gruppe von Funktionen zur Bearbeitung visueller Inhalte Folgendes umfasst:
Sammeln personenbezogener Daten, die sich auf den Benutzer beziehen, gemäß den Benutzeridentifizierungsdaten; und
Auswählen der Gruppe basierend mindestens teilweise auf den personenbezogenen Daten.

8. Verfahren nach Anspruch 7, wobei die personenbezogenen Daten aus einem sozialen Netzwerkprofil, das dem Benutzer zugeordnet ist, extrahiert werden.

9. Verfahren nach Anspruch 7, wobei die personenbezogenen Daten ein Protokoll der zuvor von dem Benutzer ausgewählten Funktionen zur Bearbeitung visueller Inhalte umfassen.

10. Verfahren nach Anspruch 1, wobei mindestens eine Funktion zur Bearbeitung visueller Inhalte der ausgewählten Gruppe eine Funktion zum Hinzufügen eines Soundtracks umfasst, der während der Darstellung des visuellen Inhalts abgespielt werden soll.

11. Verfahren nach Anspruch 1, wobei mindestens eine Funktion zur Bearbeitung visueller Inhalte der ausgewählten Gruppe eine Funktion zum Hinzufügen einer visuellen Überlagerung umfasst, die mit dem visuellen Inhalt dargestellt werden soll.

12. System (100), das einen oder mehrere Netzwerkserver umfasst, die so konfiguriert sind, dass sie einer Vielzahl von Client-Endvorrichtungen eine Vielzahl von Funktionen zur Bearbeitung visueller Inhalte bereitstellen, durch:
Empfangen von einer Client-Endvorrichtung (102) einer Anforderung für Funktionen zur Bearbeitung visueller Inhalte, um visuelle Inhalte, die von der Client-Endvorrichtung erfasst wurden, anzupassen, wobei die Anforderung einem Benutzer an der Endvorrichtung zugeordnet ist;
als Reaktion auf die Anforderung, Zugreifen auf demografische Daten für den Benutzer aus einem Benutzerprofil, das dem Benutzer zugeordnet ist;
Auswählen (304) einer Gruppe von Funktionen zur Bearbeitung visueller Inhalte basierend auf den demografischen Daten für den Benutzer und basierend auf einer Gruppe von Tags für die ausgewählte Gruppe von Funktionen zur Bearbeitung visueller Inhalte, wobei die Gruppe von Tags die Relevanz der ausgewählten Gruppe von Funktionen zur Bearbeitung visueller Inhalte für eine Gruppe demografischer Merkmale angibt, wobei die Gruppe von Tags von einer Gruppe eines Datensatzes von Funktionen zur Bearbeitung visueller Inhalte der ausgewählten Gruppe von Funktionen zur Bearbeitung visueller Inhalte bereitgestellt wird, wobei wenigstens eine Funktion zur Bearbeitung visueller Inhalte der ausgewählten Gruppe von Funktionen zur Bearbeitung visueller Inhalte eine Überlagerung umfasst, die auf die visuellen Inhalte angewendet werden soll; und
Reagieren (305, 306) auf die Anforderung durch Senden einer Antwort mit einer Liste, die die ausgewählte Gruppe von Funktionen zur Bearbeitung visueller Inhalte und/oder Angaben der ausgewählten Funktionen zur Bearbeitung visueller Inhalte enthält, so dass die Client-Endvorrichtung (102) die Gruppe von Funktionen zur Bearbeitung visueller Inhalte auf einer grafischen Benutzeroberfläche darstellen und die Überlagerung auf die visuellen Inhalte anwenden kann, wenn ein Benutzer die Überlagerung über die grafische Benutzeroberfläche auswählt.

13. System nach Anspruch 12, wobei die Anforderung ferner Daten visueller Inhalte umfasst, die Positionsdaten umfassen, die sich auf den Standort der Client-Endvorrichtung beziehen, und wobei das Auswählen der Gruppe von Funktionen zur Bearbeitung visueller Inhalte ferner auf den Positionsdaten basiert;
vorzugsweise wobei das Auswählen der Gruppe von Funktionen zur Bearbeitung visueller Inhalte Folgendes umfasst:
Klassifizieren des Standorts der Client-Endvorrichtung basierend auf den Positionsdaten; und
Auswählen der Gruppe gemäß der Klassifizierung.

14. System nach Anspruch 12, wobei die Anforderung ferner Daten visueller Inhalte umfasst, die eine Geschwindigkeit der Client-Endvorrichtung umfassen, und wobei das Auswählen der Gruppe von Funktionen zur Bearbeitung visueller Inhalte ferner auf der Geschwindigkeit basiert.

15. Computerprogrammprodukt, das Softwareanweisungen umfasst, die, wenn sie von einem Prozessor eines oder mehrerer Netzwerkserver ausgeführt werden, die Netzwerkserver veranlassen, ein Verfahren nach einem der Ansprüche 1 bis 11 zu implementieren und/oder das System nach einem der Ansprüche 12 bis 14 zu implementieren.

## Revendications

1. Procédé mis en œuvre au moyen d'un ou plusieurs serveurs de réseau, ledit procédé consistant à :
recevoir, en provenance d'un terminal client (102), une demande concernant des fonctions d'édition de contenu visuel afin de régler un contenu visuel capturé par ledit terminal client, ladite demande étant associée à un utilisateur au niveau dudit terminal client ;
en réponse à ladite demande, accéder à des données démographiques pour ledit utilisateur à partir d'un profil d'utilisateur associé audit utilisateur ;
sélectionner (304) un groupe de fonctions d'édition de contenu visuel sur la base desdites données démographiques pour ledit utilisateur et sur la base d'un groupe d'étiquettes pour ledit groupe sélectionné de fonctions d'édition de contenu visuel, ledit groupe d'étiquettes indiquant la pertinence dudit groupe sélectionné de fonctions d'édition de contenu visuel par rapport à un groupe de caractéristiques démographiques, ledit groupe d'étiquettes étant fourni par un groupe d'enregistrements de fonctions d'édition de contenu visuel dudit groupe sélectionné de fonctions d'édition de contenu visuel, au moins une fonction d'édition de contenu visuel dudit groupe sélectionné de fonctions d'édition de contenu visuel comprenant une superposition à appliquer audit contenu visuel ; et
répondre (305, 306) à ladite demande en envoyant une réponse avec une liste qui comprend ledit groupe sélectionné de fonctions d'édition de contenu visuel et/ou des indications desdites fonctions d'édition de contenu visuel sélectionnées, afin de permettre audit terminal client (102) de présenter ledit groupe de fonctions d'édition de contenu visuel sur une interface graphique d'utilisateur et d'appliquer ladite superposition audit contenu visuel en réponse à une sélection de ladite superposition effectuée par un utilisateur au moyen de l'interface graphique d'utilisateur.

2. Procédé selon la revendication 1, ladite demande comprenant en outre des données de contenu visuel comprenant des données de position relatives à une localisation dudit terminal client, et la sélection dudit groupe de fonctions d'édition de contenu visuel étant en outre basée sur lesdites données de position.

3. Procédé selon la revendication 2, la sélection dudit groupe de fonctions d'édition de contenu visuel consistant à :
classer ladite localisation dudit terminal client sur la base desdites données de position ; et
sélectionner ledit groupe selon ladite classification.

4. Procédé selon la revendication 1, ladite demande comprenant en outre des données de contenu visuel comprenant une vitesse dudit terminal client, et la sélection dudit groupe de fonctions d'édition de contenu visuel étant en outre basée sur ladite vitesse.

5. Procédé selon la revendication 1, consistant en outre à analyser un contenu textuel en provenance d'une pluralité de sources de réseau fournissant du contenu afin d'identifier au moins un événement courant, et la sélection dudit groupe de fonctions d'édition de contenu visuel étant en outre basée sur ledit au moins un événement courant.

6. Procédé selon la revendication 5, l'analyse dudit contenu textuel consistant à réaliser une analyse sémantique dudit contenu textuel et/ou une analyse statistique dudit contenu textuel.

7. Procédé selon la revendication 1, ladite demande comprenant une identification d'utilisateur, et la sélection dudit groupe de fonctions d'édition de contenu visuel consistant à :
acquérir des données personnelles relatives audit utilisateur selon ladite identification d'utilisateur ; et
sélectionner ledit groupe sur la base au moins en partie desdites données personnelles.

8. Procédé selon la revendication 7, lesdites données personnelles étant extraites d'un profil de réseau social associé audit utilisateur.

9. Procédé selon la revendication 7, lesdites données personnelles comprenant un journal de fonctions d'édition de contenu visuel sélectionnées précédemment par ledit utilisateur.

10. Procédé selon la revendication 1, au moins une fonction d'édition de contenu visuel dudit groupe sélectionné comprenant une fonction pour ajouter une bande sonore à lire pendant que ledit contenu visuel est présenté.

11. Procédé selon la revendication 1, au moins une fonction d'édition de contenu visuel dudit groupe sélectionné comprenant une fonction pour ajouter une superposition visuelle à présenter avec ledit contenu visuel.

12. Système (100) comprenant un ou plusieurs serveurs de réseau configurés pour fournir une pluralité de fonctions d'édition de contenu visuel à une pluralité de terminaux clients en effectuant les opérations consistant à :
recevoir, en provenance d'un terminal client (102), une demande concernant des fonctions d'édition de contenu visuel afin de régler un contenu visuel capturé par ledit terminal client, ladite demande étant associée à un utilisateur au niveau dudit terminal client ;
en réponse à ladite demande, accéder à des données démographiques pour ledit utilisateur à partir d'un profil d'utilisateur associé audit utilisateur ;
sélectionner (304) un groupe de fonctions d'édition de contenu visuel sur la base desdites données démographiques pour ledit utilisateur et sur la base d'un groupe d'étiquettes pour ledit groupe sélectionné de fonctions d'édition de contenu visuel, ledit groupe d'étiquettes indiquant la pertinence dudit groupe sélectionné de fonctions d'édition de contenu visuel par rapport à un groupe de caractéristiques démographiques, ledit groupe d'étiquettes étant fourni par un groupe d'enregistrements de fonctions d'édition de contenu visuel dudit groupe sélectionné de fonctions d'édition de contenu visuel, au moins une fonction d'édition de contenu visuel dudit groupe sélectionné de fonctions d'édition de contenu visuel comprenant une superposition à appliquer audit contenu visuel ; et
répondre (305, 306) à ladite demande en envoyant une réponse avec une liste qui comprend ledit groupe sélectionné de fonctions d'édition de contenu visuel et/ou des indications desdites fonctions d'édition de contenu visuel sélectionnées, afin de permettre audit terminal client (102) de présenter ledit groupe de fonctions d'édition de contenu visuel sur une interface graphique d'utilisateur et d'appliquer ladite superposition audit contenu visuel en réponse à une sélection de ladite superposition effectuée par un utilisateur au moyen de l'interface graphique d'utilisateur.

13. Système selon la revendication 12, ladite demande comprenant en outre des données de contenu visuel comprenant des données de position relatives à une localisation dudit terminal client, et la sélection dudit groupe de fonctions d'édition de contenu visuel étant en outre basée sur lesdites données de position ;
de préférence la sélection dudit groupe de fonctions d'édition de contenu visuel consistant à :
classer ladite localisation dudit terminal client sur la base desdites données de position ; et
sélectionner ledit groupe selon ladite classification.

14. Système selon la revendication 12, ladite demande comprenant en outre des données de contenu visuel comprenant une vitesse dudit terminal client, et la sélection dudit groupe de fonctions d'édition de contenu visuel étant en outre basée sur ladite vitesse.

15. Produit-programme informatique comprenant des instructions logicielles qui, lorsqu'elles sont exécutées par un processeur d'un ou de plusieurs serveurs de réseau, amènent les serveurs de réseau à mettre en œuvre un procédé selon l'une quelconque des revendications 1 à 11 et/ou à mettre en œuvre le système selon l'une quelconque des revendications 12 à 14.
